# EUROPEAN PATENT APPLICATION

(11) **EP 1 617 325 A1**
(43) Date of publication of application: **18.01.2006**
(21) Application number: 04716340.7
(22) Date of filing: 02.03.2004
(51) Int. Cl.: G06F 9/06, G06F 15/00

(54) **INFORMATION PROCESSING DEVICE, INFORMATION PROCESSING METHOD, PROGRAM, RECORDING MEDIUM**

(30) Priority: 26.03.2003 JP 2003085485
(71) Applicant: SONY CORPORATION, Tokyo 141-0001 (JP)
(72) Inventor: SATO, Takashi, Shinagawa-ku, Tokyo 141 (JP)
(74) Representative: Horner, David Richard
(86) International application number: PCT/JP2004/002558
(87) International publication number: WO 2004/086218

(57) **Abstract**

An information processing apparatus is disclosed which allows a user easily to utilize an application program in a user-specific operating environment on different computers. Loaded with a storage medium including at least a storage area that stores a media ID and the application program and another storage area into which to store user-specific setting information in write-once fashion, the information processing apparatus has a suitable operating environment set up using environment setting information which is found on the loaded storage medium and which at least includes the user setting information. In the user-specific operating environment thus set up, the application program held on the same storage medium is started and executed.

## Description

### Technical Field

The present invention relates to an information processing apparatus and an information processing method for processing data stored illustratively on a storage medium. The invention further relates to a program to be executed by the information processing apparatus and to a storage medium on which the program is written.

### Background Art

It is common practice today to browse websites and to send and receive e-mails over networks including the Internet using information processing apparatuses such as personal computers.

To access the network using the personal computer or like equipment generally involves the user's manual input of information items necessary for setting up an environment suitable for connecting to the network or for carrying out application programs connected to the network. The input is typically made through an input guidance program called a wizard.

Following the input of such information to the personal computer, an operating environment appropriate for connecting to the network or for executing application programs is set up accordingly and the settings are retained in the PC. Thereafter, the setting information is used to access the network or to perform application programs correctly.

The above set-up of the environment involves a considerable number of input items and calls for a certain knowledge of networks. That means the set-up work is never easy for the general user.

The environment setting information, as mentioned above, is retained in the personal computer where the information was input and set up. If the user wants to use a different personal computer, the user is required to make the relatively complicated manual data input all over again for setting up the environment on the new personal computer.

At present, when using a Web browser or utilizing an application program for e-mail transmission and reception, each user is thus required to set up an operating environment necessary for accessing the network and carrying out the application program on each personal computer.

That means the degree of flexibility is low for each user to readily access the network using a different personal computer that needs to be set up to create the same operating environment.

One solution to the above bottleneck is disclosed illustratively in Japanese Patent Laid-open No. Hei 9-198156. The disclosure is outlined as follows:

An application program is assumed to be installed beforehand in chargeable public-use computers. A user is offered a storage medium that contains operating environment data for executing the application program and a storage area for accommodating work data (i.e., application files). When the user utilizes any one of the public-use computers, the user-owned storage medium is loaded into the computer and the operating environment data is read from the medium into the computer to set up the operating environment for the application program. When execution of the application program is brought to an end, the work files derived from the program execution are written from the public-use computer to the user's storage medium.

Where the structure above is provided, the user need only carry around the above-described storage medium necessary for using the public-use computer. There is no need for the user to make environment setting input to a plurality of different computers, which makes public computer use appreciably easier than before.

The structure disclosed in the above-cited Japanese Patent Laid-open No. Hei 9-198156 requires installing the application program into public-use computers beforehand. That means the user can only use the public-use computer that retains the application program for which the environment can be set up using the user-owned storage medium. In that sense, the disclosed structure still poses limitations on the degree of flexibility for the user to employ different personal computers in the same operating environment.

### Disclosure of Invention

The present invention has been made in view of the above circumstances. According to one embodiment of the invention, there is provided an information processing apparatus including: storage medium drive controlling means for controlling writing and reading of data to and from a storage medium including at least a first storage area which stores data constituting an application program in a nonrewritable format, a second storage area which stores identification information indicating that at least the application program is legitimately stored on the storage medium, and a third storage area into which to store user-related information in write-once fashion; authenticating means for authenticating the storage medium at least in accordance with the identification information stored in the second storage area; setting means which, if the storage medium is successfully authenticated by the authenticating means, then sets requirements for executing the application program stored in the first storage area, using setting information which at least includes the user-related information and which is stored on the storage medium; and executing means for executing, in an environment set up by the setting means, the application program stored in the first storage area of the storage medium.

According to another embodiment of the present invention, there is provided an information processing method including the steps of: writing/reading data to and from a storage medium including at least a first storage area which stores data constituting an application program in a nonrewritable format, a second storage area which stores identification information indicating that at least the application program is legitimately stored on the storage medium, and a third storage area into which to store user-related information in write-once fashion; authenticating the storage medium at least in accordance with the identification information stored in the second storage area; if the storage medium is successfully authenticated in the authenticating step, then setting requirements for executing the application program stored in the first storage area, using setting information which at least includes the user-related information and which is stored on the storage medium; and executing, in an environment set up in the setting step, the application program stored in the first storage area of the storage medium.

According to a further embodiment of the present invention, there is provided a program for causing an information processing apparatus to carry out a procedure including the steps of: writing/reading data to and from a storage medium including at least a first storage area which stores data constituting an application program in a nonrewritable format, a second storage area which stores identification information indicating that at least the application program is legitimately stored on the storage medium, and a third storage area into which to store user-related information in write-once fashion; authenticating the storage medium at least in accordance with the identification information stored in the second storage area; if the storage medium is successfully authenticated in the authenticating step, then setting requirements for executing the application program stored in the first storage area, using setting information which at least includes the user-related information and which is stored on the storage medium; and executing, in an environment set up in the setting step, the application program stored in the first storage area of the storage medium.

According to an even further embodiment of the present invention, there is provided a storage medium which stores the above-outlined program.

Where the information processing apparatus, information processing method, and program according to the invention are in use, predetermined information which at least includes user-related information and which is stored on a storage medium is used in a process to make the settings necessary for executing an application program stored on the same storage medium. The setting process establishes an operating environment in which to execute the application program held on the storage medium.

That is, the set-up of the environment for using the application program stored on the storage medium is carried out automatically using environment setting information stored on the same storage medium.

The set-up of the environment and the execution of the application program will not be allowed unless the storage medium is authenticated by use of identification information that is stored on the same storage medium in nonrewritable fashion. In other words, an illegitimate storage medium on which the identification information is not found does not allow the operating environment to be set up or the application program to be carried out.

### Brief Description of Drawings

Fig. 1 is a schematic view showing typical storage areas allocated on a piece of application media embodying the present invention;
Figs. 2A, 2B and 2C are explanatory views showing how a piece of application media embodying the invention is used in conjunction with a personal computer in operation;
Figs. 3A, 3B, 3C and 3D are explanatory views showing how a piece of application media embodying the invention is used in conjunction with personal computers in operation;
Fig. 4 is a block diagram showing a typical internal structure of a personal computer;
Fig. 5 is a flowchart of steps in which a personal computer complying with the inventive application media typically operates; and
Fig. 6 is another flowchart of steps in which the personal computer complying with the inventive application media typically operates.

### Best Mode for Carrying out the Invention

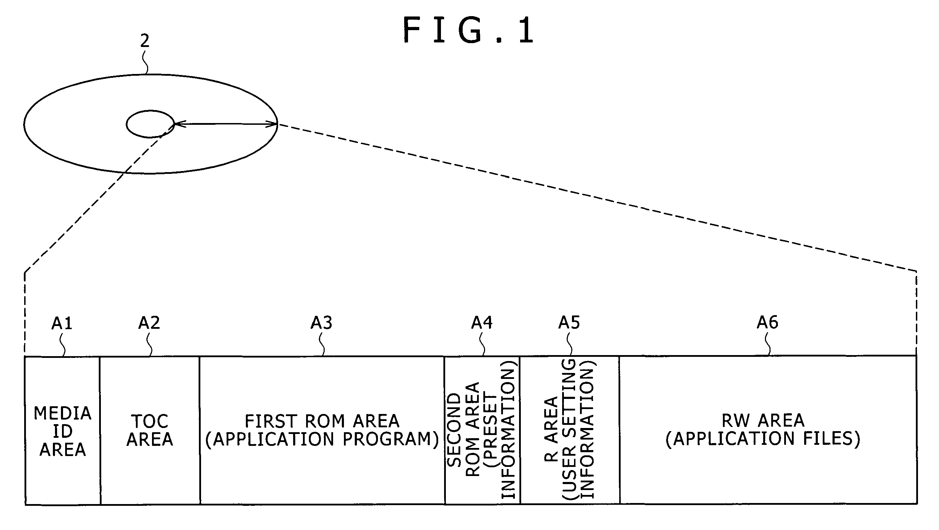

Fig. 1 schematically shows how data content is written to a piece of application media embodying the present invention. This piece of application media contains a predetermined application program and is owned by a user who utilizes an information processing apparatus such as a personal computer.

It is assumed here that the piece of application media 2 embodying this invention is an optical disk type storage medium.

As illustrated, the piece of application media 2 has in its radially innermost zone a media ID area A1 in which a media ID is recorded.

The application media 2 embodying this invention are manufactured illustratively as package media which store an application program and which are marketed to the general public. The media ID is assigned uniquely to each piece of application media 2 thus manufactured for identification purposes. In other words, the media ID identifies each piece of application media 2 legitimately manufactured.

With this embodiment, the media ID is written to the media ID area A1 as follows: writable optical disk media such as CD-ROM, CD-R and CD-RW are each required to provide an area in which to record disk type identification information (i.e., the area is called the disk type identification information area) radially inside of a TOC area. The disk type represents illustratively the ROM type, write-once type, rewritable type, etc.

When a disk drive that complies with CD-ROM, CD-R and CD-RW is loaded with a disk, the drive first accesses the disk type identification information area to determine the disk type. With the type of the loaded disk recognized, the disk drive establishes a corresponding operation mode.

The disk type identification information is recorded to a protective film layer over a signal recording layer on the signal side of the disk. The disk type identification information recorded in the protective film layer is ROM type information that remains nonrewritable.

With this embodiment, the media ID is recorded to the media ID area A1 using the same technique as that of recording the disk type identification information to the protective film layer. That is, the media ID is recorded to the media ID area A1 in the protective film layer in nonrewritable fashion, the area A1 being located radially inside of the TOC area.

During manufacture, a writable area is typically set aside in the protective film layer to form a media ID area A1 large enough to accommodate the size of data stipulated as a media ID. A serial number is recorded as a unique media ID to that writable area allocated in the protective film layer of each piece of media. The data size of the media ID may be illustratively 64 bytes, considering a sufficient number of media IDs to cover all pieces of manufactured package media and the density of the data to be recorded to the protective film layer with the current state of the art.

Radially outside of the media ID area A1, five areas are typically formed: a TOC area A2, a first ROM area A3, a second ROM area A4, an R area A5, and an RW area A6, arranged in that order from the radially innermost zone of the disk toward its circumference. It should be noted that data is recorded to the five areas in the signal recording layer under the protective film layer.

TOC information about this disk is recorded to the TOC area A2 in nonrewritable fashion (i.e., in ROM format) during manufacture.

The TOC area A2 may also accommodate information such as file system information used by the personal computer to manage writing and reading of data to and from the application media.

The data constituting a given application program is written to the first ROM area A3 in nonrewritable fashion during manufacture. Whereas any application program may be recorded in this area, this embodiment presupposes the storage in this area of a so-called mailer, a program for sending, receiving and managing e-mail data over networks such as the Internet.

Preset information is written to the second ROM area A4 in nonrewritable fashion during manufacture. The information is recorded with the following circumstances take into account:

As is generally known, to use networks such as the Internet requires setting up an environment for accessing the network and for sending and receiving e-mails, using information including the address of an ISP (Internet Service Provider) and the IP address of a DNS (Domain Name System) server, the addresses of mail transmission and reception servers, and the user's mail address.

Where the ISP, mail transmission and reception servers, and settings of other necessary arrangements are determined in advance for using the mailer stored on the application media 2, the above-mentioned address of the ISP, IP address of the DNS server, and addresses of the mail transmission and reception servers may be determined beforehand regardless of the user.

Of the settings necessary for establishing the suitable environment, those that have been predetermined as described above are then written to the second ROM area A4 as the preset information in the case of this embodiment.

The R area A5 is a write-once recordable area. User setting information may be written to this area in nonrewritable fashion.

The user setting information refers illustratively to user-specific environment setting information such as the user's mail address as part of the environment setting information necessary for setting up the environment. During manufacture, the R area A5 is produced as a blank area with no data recorded therein.

The RW area A6 is a recordable-rewritable area. This area accommodates application files that can be processed by the application program held in the first ROM area A3. Since the RW area A6 is a rewritable area, it is possible to add new applications files to this area or to update or delete existing application files in or from this area.

The RW area A6 is also produced as a blank area with no data recorded therein during manufacture.

The TOC area A2 (ROM area), first ROM area A3, and second ROM area A4 may be arranged to constitute an emboss pit zone in the signal recording layer. Data may be recorded to these areas illustratively by a stamping process.

The R area A5 may be arranged to constitute a dye film-based signal recording layer for use with CD-R, DVD-R. Compatible disk drives are designed to record data to the R area A5 in the signal recording layer.

The RW area A6 may be arranged to constitute a signal recording layer that can be addressed illustratively by the phase change recording method for use with CD-RW, DVD-RW and +RW. The disk drive need only be structured to record data to this type of signal recording layer.

As described, the inventive piece of application media is a so-called hybrid disk on which diverse storage areas including the ROM areas, write-once read-only area (R area), and readable-writable area (RW area) are allocated side by side for diverse kinds of data to be recorded therein.

During manufacture, as explained above, a media ID is recorded to the media ID area A1 which is a ROM area in the protective film layer. Radially outside of the media ID area A1, TOC information is written to the TOC area A2, an application program to the first ROM area A3, and preset information to the second ROM area A4. The R area A5 and RW area A6 are left blank with no data recorded therein.

The inventive piece of application media 2 thus manufactured retains the application program in ROM format and offers recordable areas in a virgin state when marketed as package media to the general public.

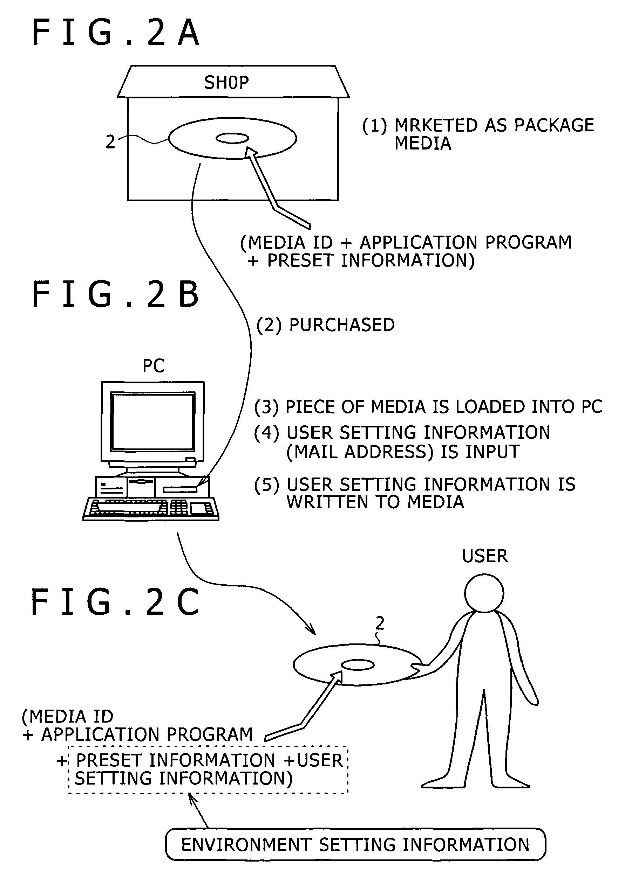

Described below with reference to Figs. 2A through 3D is how the piece of application media 2 embodying this invention is typically used by the user. Also outlined is how the personal computer operates in conjunction with the piece of application media 2 embodying the invention.

The description and outlining will proceed in keeping with the numbered steps parenthetic in the figures.

The piece of application media 2 manufactured as discussed above according to the invention is marketed as packet media to the general public typically in shops, as indicated by step (1) in Fig. 2A. At the marketing stage, the data recorded on the application media 2 is made up mostly of a media ID, an application program, and preset information. At this stage, user setting information and application files are not recorded on the media yet.

As discussed above, TOC information is also recorded as ROM data during manufacture. In the description that follows, however, it is assumed that the TOC information has already been recorded on the media for purpose of simplification and illustration. The TOC information will be mentioned only if doing so is specifically needed.

The application media 2 may alternatively be marketed through diverse distribution channels, including mail order.

Any user who may want to make use of the application program (e.g., mailer) stored on the application media 2 as package media is expected to purchase and own, in step (2), a piece of application media 2 being marketed.

The user in possession of the piece of application media 2 loads it into the personal computer, in step (3) shown in Fig. 2B.

With this embodiment, the user typically loads an as-purchased piece of application media 2, i.e., a disk with no user information recoded on it, into the personal computer. In turn, a display device of the personal computer is prompted to display a GUI screen through which to input the user setting information (i.e., the screen is called the user setting information input screen). In step (4), the user enters necessary items of the user setting information into input boxes of the user setting information input screen typically in alphanumeric characters by operating a keyboard or the like.

For this embodiment, it was assumed above that the mailer is stored on the application media 2 as the application program. As described, to use the mailer requires establishing beforehand the settings necessary for accessing a network such as the Internet as well as the environment settings for operating the mailer.

For this embodiment, it is also assumed for purpose of simplification and illustration that the information necessary for the set-up of the environment is constituted solely by the address of an ISP server, the IP address of a DNS server, the address of a mail transmission server, the address of a main reception server, and the user's mail address. Where the ISP has already been determined, the address of the ISP server, IP address of the DNS server, address of the mail transmission server, and address of the reception server may be determined in advance regardless of the user.

Of the environment setting information necessary for establishing the suitable environment, the IP address of the ISP server, IP address of the DNS server, address of the mail transmission server, and address of the mail reception server are thus assumed to be written to the second ROM area A4 of the application media 2 at the marketing stage (or manufacturing stage) in the case of this embodiment.

It follows that, with this embodiment, the only user setting information to be written to the R area A5 of the application media 2 is the user's mail address which is just one item of the environment setting information. That is, the item to be entered in step (4) is the user's mail address alone.

According to the invention, as described, the environment setting information common to users is written beforehand to the application media 2 as preset information. This arrangement minimizes the number of items to be input manually by each user as part of the environment setting information in step (4). Illustratively, only the user's mail address needs to be entered in step (4) with this embodiment.

When the user has finished inputting the mail address to the user's personal computer in step (4), the personal computer records the input mail address to the R area A5 of the loaded application media 2 as the user setting information. It should be noted that the R area A5 is a write-once area where data may be added but not changed and that no further data can be added to the area once a closing process is executed on that area. When the necessary user setting information has been written to the R area A5, that area is "closed." Thereafter, the R area A5 serves as a ROM area that retains the user setting information in a nonrewritable manner.

As a result, the inventive piece of application media 2 holds at this point the user-input user setting information in addition to the media ID, application program, and preset information stored earlier during manufacture, as shown in Fig. 2C. With the user setting information recorded, all environment setting information necessary for using the mailer (i.e., application program) is stored in nonrewritable ROM format on the application media 2.

The mail address (i.e., user setting information) as part of the environment setting information is unique to the user who purchased and owns this piece of application media 2. That means the piece of application media 2 on which the mail address is stored can be used solely by the user in question.

In the description that follows, two kinds of application media 2 may be distinguished from each other: application media 2 with a complete set of environment setting information stored thereon, including preset information and user setting information; and application media 2 in an as-manufactured state with the setting information yet to be recorded thereon.

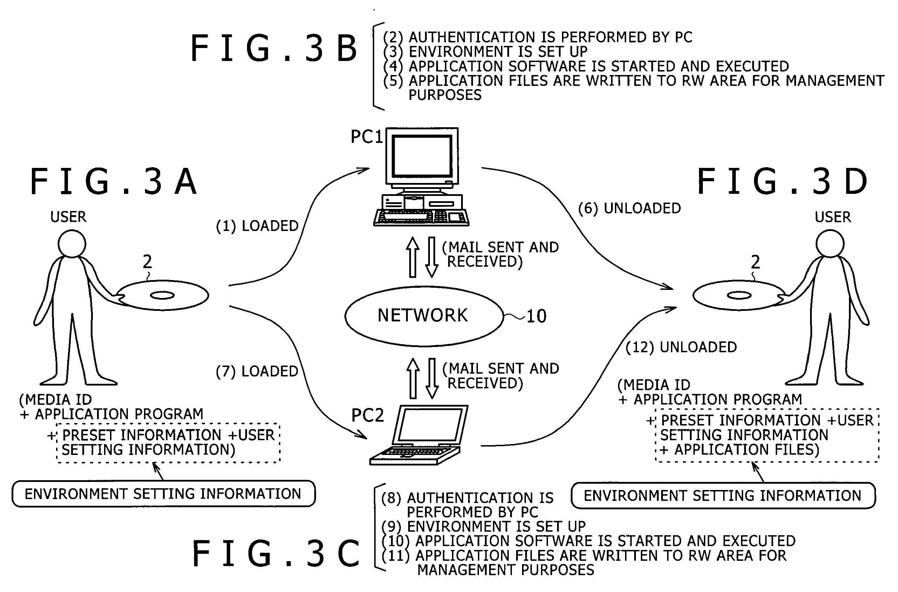

What is depicted in Figs. 3A through 3D will now be explained. In Fig. 3A, the user is shown in possession of a piece of application media 2 with user setting information stored thereon as indicated in Fig. 2C. Suppose that the user wants to run the application program (i.e., mailer) stored on the setting information-furnished piece of application media 2 on a personal computer PC1 indicated in Fig. 3B. In that case, the user loads this piece of application media 2 into the personal computer PC1 in step (1) as indicated.

The personal computer PC1 then recognizes the user setting information on the loaded piece of media, and determines that what has been loaded is a setting information-furnished piece of application media 2.

With the loaded piece of application media 2 found to carry the setting information, the personal computer PC1 proceeds to execute an authenticating process by which to determine whether the loaded piece of application media 2 is a legitimate one, in step (2) of Fig. 3B.

As will be discussed later in more detail, a check is made here to determine whether a media ID is recorded in the media ID area A1 in the protective film layer of the application media 2.

If the media ID is not detected where it should be, that means the currently loaded piece of application media 2 furnished with the setting information is not a legitimately marketed piece of application media 2. The loaded piece of media may well have been produced by illicitly copying the application program on a recordable medium in the same disk format as the legitimate application media 2.

When the media ID is not found, the authenticating process is unsuccessful and any subsequent processes will not be carried out on the application media 2. In this manner, the loaded piece of media is authenticated only if it is found to contain a media ID which is supposed to be recorded on every piece of legitimate application media 2.

Once the media ID is recognized on the loaded piece of media in the authenticating process, the piece of media in question is authenticated as a valid piece of application media 2.

Following the successful authentication, the personal computer PC1 sets up a user-specific environment necessary for the user to access the network and to send and receive e-mails in step (3) of Fig. 3B as indicated. The set-up of the environment, performed illustratively by the operating system (OS) of the personal computer PC1, involves making use of the preset information in the second ROM area A4 and the user setting information in the R area A5 on the loaded piece of application media 2 furnished with the setting information.

When the set-up of the environment is completed, the application program (mailer) is started following its retrieval from the first ROM area A3 of the loaded piece of application media 2 furnished with the setting information, in step (4) of Fig. 3B. Once started, the mailer carries out processes corresponding to the user's operations on the personal computer PC1 in the environment set up in step (3) above for connecting to the network and for executing the application program.

For example, if the user performs operations to send or receive e-mail, connection is established with the ISP and with the mail transmission and reception serves over a network 10 in accordance with the network connection environment that has been set up.

If the user performs operations to terminate the application program, the mailer that has been active is brought to an end. With this embodiment, the following process also takes place when the mailer is terminated:

Since the mailer was started in step (4) above and has been in operation, new application files represented by received or transmitted mails may have been created. Such application files are retained in a RAM or on a hard disk drive of the personal computer PC1 while the mailer is active.

As will be discussed later, one advantage derived from the use of the inventive application media 2 is that as long as a legitimate piece of application media 2 is purchased and owned by a user, it can be loaded into different personal computers to let the user utilize the application program (mailer) easily without manually inputting the settings into each new PC to set up a user-specific operating environment therein.

If the application files of the mailer were held during operation illustratively in the RAM of the personal computer PC1, they would disappear when the personal computer PC 1 is turned off and can never be used again by the user. If the application files were retained on the hard disk drive, they would not be erased when the personal computer PC1 is deactivated but cannot be used by the user when he or she runs the mailer on another personal computer.

Such inconveniences are bypassed by this embodiment when, upon termination of the mailer, the application files being retained by the personal computer PC1 are written to the RW area A6 of the loaded piece of application media 2 for storage in step (5) of Fig. 3B.

When the piece of application media 2 is unloaded from the personal computer PC1 upon termination of the mailer in step (6) as indicated, the piece of media is furnished with the application files of the mailer in addition to the setting information already stored on the media as shown in Fig. 3D.

As a result, the user in possession of the setting information-furnished piece of application media 2 may carry around the application files derived from execution of the mailer together with that application program.

Suppose now that the setting information-furnished piece of application media 2 shown in Fig. 2A is loaded into a personal computer PC2 of Fig. 3C which is different from the personal computer PC1 of Fig. 3B, in step (7) as indicated.

In that case, the personal computer PC2 carries out steps (8), (9), (10) and (11) in the same manner as steps (2), (3), (4) and (5) explained earlier with reference to Fig. 3B. Upon termination of the mailer, the loaded piece of application media 2 is ejected (i.e., unloaded) from the personal computer PC2 in step (12) as indicated. This allows the inventive piece of application media 2 to retain not only the setting information but also the application files derived from the mailer execution shown in Fig. 3D.

It should be noted that the setting information-furnished piece of application media 2 which contains the application files as shown in Fig. 3D can also be loaded into and used by yet another personal computer different from the PC on which the files were created. For example, the setting information-furnished piece of application media 2 to which the application files have been written by the personal computer PC1 in Fig. 3B may be loaded into and used by the personal computer PC2.

In the foregoing case, when the mailer is started, the application files are read from the loaded piece of application media 2 so that the user may operate on the files while using the mailer. When the user performs operations to create, update or delete application files, the result of the operations on the files will be reflected in the RW area A6 (i.e., the files are updated) upon termination of the mailer.

From the description above, it can be seen that this embodiment of the invention offers the following features:

With this embodiment, user setting information is written to a piece of application media 2 devoid of setting information so as to create a piece of application media 2 with the setting information stored thereon. Once created, the setting information-furnished piece of application media 2 need only be loaded into any personal computer whereby the user-specific operating environment is automatically set up and the mailer is started. In other words, as long as the user intends to use the application program stored on this particular piece of application media 2, there is no further need for the user to repeat the tedious and complicated manual input of settings to each new personal computer to set up the necessary environment therein as has been the case conventionally.

The absence of the need to input settings anew also applies to the case where the mailer stored on the application media 2 is to be used on a personal computer different from the one usually utilized by the user as illustrated in Figs. 3A through 3D. This gives the user a greater degree of freedom than before because the use of the application program is not limited to any specific personal computer.

As another example, if the user replaces the existing personal computer with a newly purchased PC, there is no need for the user to make entries into the PC to set up the operating environment anew for the application program as long as the inventive piece of application media 2 is utilized.

Furthermore, the environment setting information common to different users is stored beforehand in ROM format on the inventive application media 2 as preset information. This makes it possible to minimize the number of items of user setting information to be input for creating the setting information-furnished piece of application media 2. Illustratively, only user-specific items that need to be entered personally by the user are required to be input. That means the one-shot work of inputting the user setting information is made as simple and straightforward as possible.

The personal computer PC shown in Fig. 2A through 2C may be either of the personal computers PC1 and PC2 indicated in Figs. 3A through 3D. Alternatively, the personal computers PC, PC1 and PC2 may all be different computers.

In other words, the personal computer operated by the user to write the user setting information to the piece of application media 2 devoid of the setting information may or may not be the same as the personal computer into which the user loads the setting information-furnished piece of application media 2 to set up the necessary environment therein for executing the mailer application. It does not matter whether the same or different computers are used on these two occasions.

What follows is a description of how the personal computer for performing operations compatible with the inventive piece of application media 2 discussed above is illustratively structured.

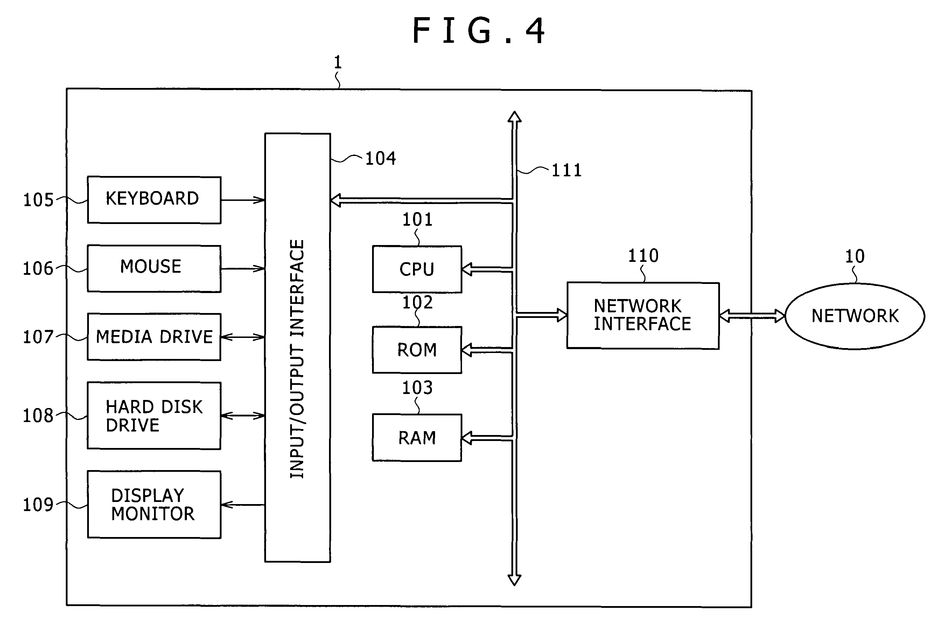

Fig. 4 is a block diagram showing a typical structure of a personal computer conforming to the application media 2 embodying the invention. The personal computer 1 shown in Fig. 4 corresponds illustratively to any one of the personal computers PC, PC1 and PC2 indicated in Figs. 2A through 3D.

The personal computer 1 has a network interface 110 for conducting communications over the network 10. The network interface 110 enables the personal computer 1 to access an information processing apparatus such as another personal computer connected to the network 10.

In practice, the network interface 110 should preferably be structured in compliance with the communication protocol of a LAN if the personal computer is connected to the LAN, or in accordance with TCP/IP if the PC is connected to the Internet.

A CPU 101 carries out diverse processes in keeping with the operating program (OS) and various application programs installed illustratively on a hard disk drive 108 or in accordance with programs held in a ROM 102. With this embodiment, processes are also performed by executing the application program (mailer) stored on the piece of application media 2 loaded in a media drive 107, to be described later.

A RAM 103 is a work area for use by the CPU 101. As such, the RAM 103 accommodates programs and data needed by the CPU 101 in carrying out its diverse processes.

An input/output interface 104 is connected illustratively to input devices such as a keyboard 105 and a mouse 106. Operation signals supplied from these input devices are output through this interface to the CPU 101.

The input/output interface 104 is also connected to the media drive 107. The media drive 107 is structured as a disk drive capable of writing and reading data to and from the loaded disk at least in the format of the application media 2 embodying the invention.

The input/output interface 104 is further connected to the hard disk drive 108 equipped with hard disks as its storage medium. The CPU 101 may write and read data and programs to and from the hard disk drive 108 by way of the input/output interface 104. Also connected to the input/output interface 104 is a display monitor 109 for displaying pictures.

An internal bus 111 is constituted illustratively by a PCI (Peripheral Component Interconnect) bus or by a local bus or the like. It interconnects the component devices inside the personal computer.

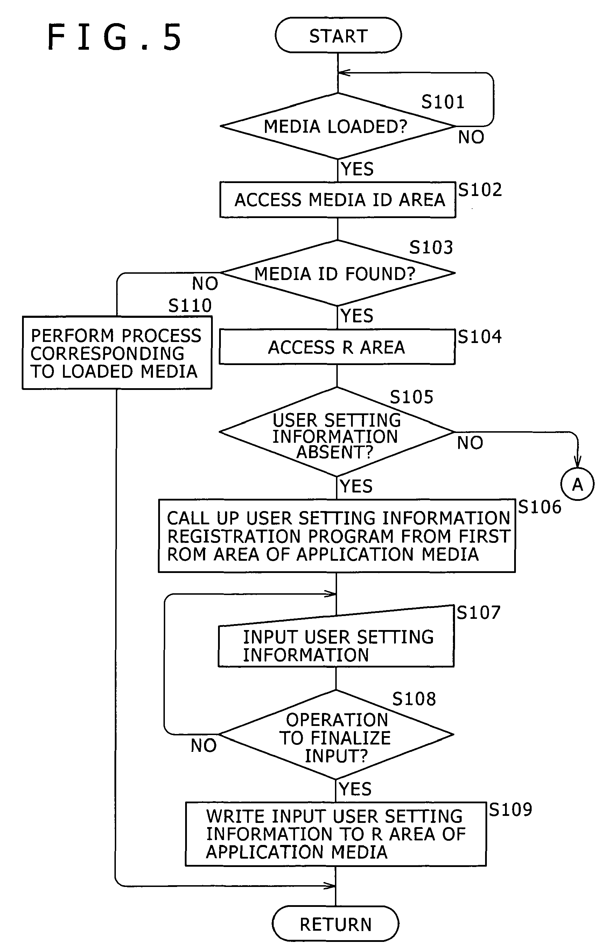

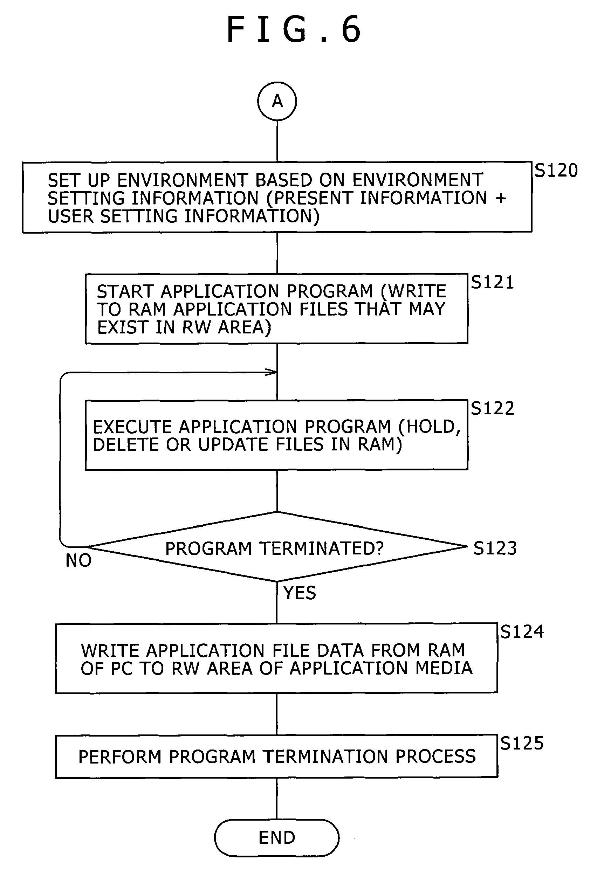

Described below with reference to the flowcharts of Figs. 5 and 6 are typical processes performed by the personal computer 1 with regard to the loaded piece of application media 2. The steps shown in the figures are carried out by the CPU 101 in accordance with the operating system and with the application program (mailer) started by the OS from the loaded piece of application media 2.

In step S101, the personal computer 1 waits for a piece of media to be loaded into the media drive 107. When the media drive 107 is found loaded with the piece of media, step S102 is reached.

In step S102, the media ID area A1 on the loaded piece of media is accessed and signals are read from that area in which a media ID is supposed to be recorded. In step S103, a check is made to determine whether any media ID is read from the accessed media ID area A1.

If the media ID is read from the accessed area, that means the loaded piece of application media 2 is a legitimate one because of the media ID found in the media ID area A1. In this case, step S104 and subsequent steps are reached and carried out.

If the media ID is not read from the access area of the loaded piece of media, that means there is no media ID recorded in what is supposed to be the media ID area A1. The loaded piece of media is then deemed to be something other than the application media 2 according to this invention. In this case, step S110 is reached and a predetermined process is carried out on the loaded piece of media.

What is deemed something other than the application media 2 illustratively includes an illegitimate copy of application media 2 produced by copying the application program data to a compatible piece of media. Since the illicitly copied piece of application media 2 has no media ID that should have been recorded during manufacture, the result of the check in step S103 is negative, and control is passed on to step S110.

When step S110 is reached and carried out, that means step S104 and subsequent steps will not be performed on what has turned out to be an illicit copy of application media 2. That is, an attempt to load and use an illegitimate copy of application media 2 is rejected by the personal computer 1 that remains inoperable with respect to the loaded media. This arrangement forestalls the use of illicit copies of the application media 2.

In other words, step S103 serves as an authenticating process whereby the loaded piece of application media 2 is checked for validity based on the putative presence of a media ID thereon.

When the result of the check in step S103 is affirmative, step S104 is reached and the R area A5 on the loaded piece of application media 2 is accessed. In step S105, a check is made to determine whether user setting information is absent from the R area A5 of media, i.e., whether the loaded piece of application media 2 is one which is devoid of user setting information.

If the result of the check in step S105 is affirmative (i.e., if the loaded piece of application media 2 is found free of the setting information), then steps S106 through S109 are reached and carried out to let the user input the user setting information that is recorded to the media.

It is assumed that the first ROM area A3 of the application media 2 embodying the invention contains not only the application program constituting the mailer but also a user setting information registration program known as a wizard. When step S106 is reached, the user setting information registration program is called up from the first ROM area A3.

Under control of the operating system (OS), the CPU 101 causes the media drive 107 to read the user setting information registration program from the first ROM area A3. The program thus read out is loaded into the RAM 103 and started.

When the user setting information registration program is thus started, a GUI screen appears on the display monitor 109 prompting the user to input the user setting information. In turn, the user operates the input device such as the keyboard 105 and/or the mouse 106 to make necessary entries into the GUI screen as prompted. Step S107 is a process in which the user enters the user setting information and the entries are processed accordingly.

With this embodiment, the user setting information consists of the user's mail address only. Thus in step S107, the user inputs his or her mail address and the input is processed correspondingly.

Following the input of the user setting information in step S107, a check is made in step S108 to determine whether the user has performed an operation to finalize the input. If the finalizing operation is found to have been carried out, step S109 is reached.

The user setting information (i.e., character data constituting the user's mail address) entered in step S107 is being held in the RAM 103. In step S109, instructions are given to transfer the user setting information from the RAM 103 to the media drive 107 and to write the user setting information from the media drive 107 to the R area A5 of the application media 2. Accordingly, the media drive 107 writes the transferred user setting information to the R area A5 of the application media 2 for storage. After the user setting information is recorded on the media, a finalizing operation is performed on the R area A5 so that data will not be added inadvertently to that area thereafter.

If the check in step S105 reveals that the loaded piece of application media 2 is already furnished with user setting information, then the steps shown in Fig. 6 are reached and carried out so that the necessary preparations will be made for making use of the application program recorded on the media.

In step S120 of Fig. 6, the personal computer sets up the environment necessary for utilizing the application program (mailer) held on the loaded piece of application media 2.

More specifically, the media drive 107 is instructed to read the preset information and the user setting information from the second ROM area A4 and the R area A5 on the application media 2 in such a manner that the retrieved information will be retained in the RAM 103. As mentioned above, the preset information and user setting information provides all necessary information for setting up the operating environment. In other words, the environment setting information is made up of the preset information and user setting information.

On the basis of the acquired environment setting information (i.e., preset information and user setting information), another environment is set up to allow for access to the network and for the transmission and reception of e-mails. That is, an environment setting file needed to set up the environment for network connection and for mail transmission and reception is created in such a manner as to reflect the content of the acquired environment setting information. The system of the personal computer is further arranged to enable the content of the environment setting file thus prepared.

In step S121, a process is carried out to start the application program (mailer). More specifically, the media drive 107 is instructed to read the mailer from the first ROM area A3 and load the retrieved application program into the RAM 103.

If any application files are found recorded in the RW area A6, these files are also retrieved and placed into the RAM 103 for temporary storage.

In step S122, the application program (mailer) started in step S121 is executed in a manner that corresponds to the user's operations.

For example, in response to the user's operations to prepare e-mail, the mailer carries out processes to draft e-mail data. If the user performs operations to send or receive e-mail, the mailer accesses the mail transmission server or mail reception server via the network to execute processes for e-mail transmission or reception.

It should be noted that the mailer program is executed in step S122 in the environment that was set up earlier in step S120 for network connection and for mail transmission and reception. That means e-mail transmission or reception typically involves the use of the mail address specified in the set-up of the environment. Furthermore, it is the mail transmission server and mail reception server established in the environment set-up that are to be accessed for mail transmission and reception.

If the user performs operations to preserve the created e-mail as a draft, to send or to receive e-mail, or to delete transmitted or received e-mail, the mailer program is prompted to create and/or update application files of the drafted e-mail data or of the transmitted or received e-mail data.

While the mailer is active, the creation, updating, and other managing processes regarding the application files are carried out in the RAM 103.

A check is made in step S123 to determine whether the user has performed operations to terminate the mailer acting as the application program. If the result of the check in step S123 is affirmative, then step S124 is reached.

In step S124, the application file data in the RAM 103 of the personal computer is written to the RW area A6 on the loaded piece of the application media 2.

In that case, all application file data that has been retained in the RW area A6 so far is erased to make room for the application file data that will be written from the RAM 103. In this manner, every time the application program is terminated, the content of the RW area A6 is updated to reflect the application files that have been modified during the current pass of program execution. The process in step S124 is typically carried out by the application program in response to the user's operations to terminate the program execution. In other words, in response to the user's operations to terminate the mailer, the application program is prompted to issue an event whereby the application file data retained in the RW area A6 is replaced with the application file data being held in the RAM 103.

Alternatively, the application files may be stored on the hard disk drive 108 of the personal computer for management purposes while the mailer is active. In this case, the application files held on the hard disk drive 108 are erased at the same time as they are written to the RW area A6 of the application media 2.

In step S125, the application program that has been active up to that point is terminated.

In the foregoing example, the operating system (OS) of the personal computer is assumed to control the steps outlined in Figs. 5 and 6 so that the personal computer will function in accordance with the application media 2 embodying the invention. The mailer as an application program may in the future be incorporated into the OS as one of its basic functions and/or may be designed to accept plug-in data or update data to comply with the application media 2 that may evolve over time. Additional OS program data constituting a function for dealing with the application media 2 or the plug-in data (update data) for providing the OS with a function to address the application media 2 may be recorded on various storage media that are distributed illustratively as package media. If such data is held in a server, the data may be uploaded to terminals such as the personal computer over the network.

In addition to the application files, the RW area A6 may accommodate other data related to the application program.

For example, many popular application programs including the mailer are designed to let their tool bar or their appearances be set up as desired by the user. The setting information known as the user setting information may then be recorded to the RW area A6. When the application program is started in step S121 as discussed above, the user setting data retrieved from the RW area A6 may be used for establishing the environment for the application program.

The user settings may well be changed frequently to reflect the user's varying preferences. Where the user setting data is arranged to be recorded in the rewritable RW area A6, any changes to the user setting data may be dealt with by simply updating the data in the RW area A6.

The application program to be stored on the application media is not limited to the mailer. Alternatively, any application program that connects to the network such as a web browser may be held on the application media. As another alternative, any other application program that does not make use of the network connection may be recorded on the application media.

The type of media on which the application program is recorded is not limited to the optical disk type. Alternatively, any other type of storage media such as a semiconductor memory device (more specifically, a flash memory) may be utilized. In the alternative case, the media ID needs to be recorded to the media in such a manner that the ID is nonrewritable and that a suitable memory drive is allowed to read the ID from the media. The memory area of the media may be divided into three portions: a ROM area, a write-once (R) area where data may be written only once and not rewritable, and an RW area where data may be written repeatedly. The application program and preset information may be recorded in the ROM area, the user setting information in the R area, and application files in the RW area.

As described above, this invention envisages a storage medium including at least a storage area that stores identification information and an application program and another storage area into which to store user-specific user-related information (i.e., user setting information) in write-once fashion. When loaded with the inventive storage medium, the information processing apparatus has a suitable operating environment set up using environment setting information which is found on the loaded storage medium and which at least includes the user-related information. The operating environment thus set up is specific to each user because it is based at least on the user-related information. In the user-specific environment thus established, the application program held on the same storage medium can be started and executed.

With the above structure in place, the user need only record once the user-related information to the storage medium. Thereafter, every time the application program held on the same storage medium is to be used, the operating environment specific to the user is automatically set up.

In other words, there is no need for the user to repeat the tedious and complicated manual input of settings to each different personal computer to set up the necessary operating environment therein.

The application program to be activated in the environment based on the environment setting information recorded on the storage medium is retained on the same medium. It follows that as long as the user is in possession of the inventive storage medium carrying the application program and as long as the system environment required (e.g., OS) is common, the user can utilize the application program in a user-specific operating environment on any information processing apparatus into which the storage medium may be loaded.

The environment is set up and the application program is executed only if the storage medium is successfully authenticated by use of the identification information stored in nonrewritable fashion on the same medium. The application program held on an illegitimate storage medium not furnished with the identification information will not be executed. These arrangements typically prevent the use of a storage medium prepared by illicitly copying the data from the storage medium according to the invention.

## Claims

1. An information processing apparatus comprising:
storage medium drive controlling means for controlling writing and reading of data to and from a storage medium including at least a first storage area which stores data constituting an application program in a nonrewritable format, a second storage area which stores identification information indicating that at least said application program is legitimately stored on said storage medium, and a third storage area into which to store user-related information in write-once fashion;
authenticating means for authenticating said storage medium at least in accordance with said identification information stored in said second storage area;
setting means which, if said storage medium is successfully authenticated by said authenticating means, then sets requirements for executing said application program stored in said first storage area, using setting information which at least includes said user-related information and which is stored on said storage medium; and
executing means for executing, in an environment set up by said setting means, said application program stored in said first storage area of said storage medium.

2. An information processing apparatus according to claim 1, further comprising storage controlling means which, if said user-related information is not found on said storage medium, then causes said storage medium drive controlling means to store subsequently input user-related information into said third storage area of said storage medium.

3. An information processing apparatus according to claim 1, wherein said storage medium includes a fourth storage area into which to store rewritable process-ready data to be processed by said application program; and
wherein said executing means causes said storage medium drive controlling means to store into said fourth storage area the process-ready data resulting from the execution of said application program.

4. An information processing apparatus according to claim 1, wherein said identification information stored in said second storage area is allocated uniquely to each piece of said storage medium on which said application program is stored.

5. An information processing method comprising the steps of:
writing/reading data to and from a storage medium including at least a first storage area which stores data constituting an application program in a nonrewritable format, a second storage area which stores identification information indicating that at least said application program is legitimately stored on said storage medium, and a third storage area into which to store user-related information in write-once fashion;
authenticating said storage medium at least in accordance with said identification information stored in said second storage area;
if said storage medium is successfully authenticated in said authenticating step, then setting requirements for executing said application program stored in said first storage area, using setting information which at least includes said user-related information and which is stored on said storage medium; and
executing, in an environment set up in said setting step, said application program stored in said first storage area of said storage medium.

6. A program for causing an information processing apparatus to carry out a procedure comprising the steps of:
writing/reading data to and from a storage medium including at least a first storage area which stores data constituting an application program in a nonrewritable format, a second storage area which stores identification information indicating that at least said application program is legitimately stored on said storage medium, and a third storage area into which to store user-related information in write-once fashion;
authenticating said storage medium at least in accordance with said identification information stored in said second storage area;
if said storage medium is successfully authenticated in said authenticating step, then setting requirements for executing said application program stored in said first storage area, using setting information which at least includes said user-related information and which is stored on said storage medium; and
executing, in an environment set up in said setting step, said application program stored in said first storage area of said storage medium.

7. A storage medium which stores a program for causing an information processing apparatus to carry out a procedure comprising the steps of:
writing/reading data to and from a storage medium including at least a first storage area which stores data constituting an application program in a nonrewritable format, a second storage area which stores identification information indicating that at least said application program is legitimately stored on said storage medium, and a third storage area into which to store user-related information in write-once fashion;
authenticating said storage medium at least in accordance with said identification information stored in said second storage area;
if said storage medium is successfully authenticated in said authenticating step, then setting requirements for executing said application program stored in said first storage area, using setting information which at least includes said user-related information and which is stored on said storage medium; and
executing, in an environment set up in said setting step, said application program stored in said first storage area of said storage medium.
